# EUROPÄISCHE PATENTSCHRIFT

(11) **EP 0 800 250 B1**
(45) Veröffentlichungstag und Bekanntmachung des Hinweises auf die Patenterteilung: **12.05.2004**
(21) Anmeldenummer: 96117038.8
(22) Anmeldetag: 24.10.1996
(51) Int. Cl.: H02G 3/04

(54) **Winkelkanal**
Corner channel
Canalisation de coin

(30) Priorität: 06.04.1996 DE 29606411 U
(43) Veröffentlichungstag der Anmeldung: 08.10.1997
(73) Patentinhaber: REHAU AG + Co, 95111 Rehau (DE)
(72) Erfinder: Peetz, Matthias c/o Rehau AG + Co., 95111 Rehau (DE)

(56) Entgegenhaltungen:
- EP-A- 0 600 108
- DE-U- 1 863 651

## Beschreibung

Die Erfindung betrifft einen Winkelkanal zur Verlegung von Leitungen in den Eckbereichen von aneinanderstoßenden Gebäudewänden, wobei das Unterteil mit seinen um 90° abgewinkelten Außenwänden an den Gebäudewänden anliegt und mit einem Deckelteil, welches an den freien Enden der Außenwände des Unterteils einrastet, verschließbar ist.

Aus der DE 41 03 708 A1 ist ein Kabelkanal als Eck-Kanal bekannt, dessen Seitenwände an winkelig zueinanderstehenden Wänden eines Raumes anliegen. Dieser Kabelkanal hat wenigstens eine Kammer zur Unterbringung von Kabeln, Leitungen oder dergleichen. Die Öffnung des Kabelkanal-Unterteils ist durch einen Deckel lösbar zu verschließen. An den vorderen freien Enden der Seitenwände des Kanalunterteils sind scharnierartige Deckelverrasterungen vorgesehen. Diese sind so gestaltet, daß der Deckel wahlweise um eine der beiden scharnierartigen Deckelverrasterungen verschwenkt werden kann. Dabei ergibt die jeweilige Endlage der Verschwenkbewegung eine stabile Öffnungslage des Deckels, wodurch das Beschicken des Kabelkanals erleichtert wird.

Der Nachteil dieses bekannten Eckkanals wird darin gesehen, daß die Rastverbindung des Deckelteils zum Kanalunterteil eine Art Punktverrasterung darstellt. Dies bedeutet, daß die Festlegung des Deckelteils auf dem Kanalunterteil jeweils an einen festen Rastpunkt gebunden ist. Dieser Nachteil bewirkt, daß bauseits bedingte Toleranzen in den Wandbereichen nicht ausgeglichen werden können, d.h. es treten zwangsläufig Spaltabstände oder Spannungen zwischen den freien Enden des Deckelteils und den zugeordneten Wandbereichen auf. Diese Spaltabstände sind je nach Größe der auftretenden Toleranzen größer oder kleiner und bewirken ein optisch unattraktives Montagebild.

Hier setzt die Erfindung ein, die es sich zur Aufgabe gestellt hat, eine Verbindung von Deckelteil und Kanalunterteil bei Eckkanälen für die Kabeloder Leitungsverlegung zu schaffen, mit der Bautoleranzen in den Kanalverlegebereichen so überbrückt werden können, daß Spaltbildungen oder Spannungen zwischen dem Deckelteil und den zugeordneten Wandbereichen vermieden werden.

Erfindungsgemäß wird dazu vorgeschlagen, daß die freien Enden des Unterteils in einem vorgegebenen Radius nach innen gebogen sind, und daß in entsprechenden Abmessungen von der Innenwand des Deckelteils halbkreisförmige Rastarme abragen, welche in ihrer Form dem Radius an den freien Enden des Unterteils angepaßt sind und diesen von außen her rastend umfassen, und daß die Vorderseite des Deckelteils in flexiblen Spitzen ausläuft, welche die Rastarme abdeckend übergreifen.

Es hat sich hierbei als vorteilhaft herausgestellt, daß die den Radius bildenden freien Enden des Unterteils von einem abgewinkelten Teilbereich der Außenwand im rechten Winkel zum Deckelteil gerichtet abragen. Dadurch bilden vorteilhaft die abgewinkelten Teilbereiche der Außenwand im Zusammenwirken mit der Gebäudewand jeweils eine Eingriffsöffnung für die freien Enden der halbkreisförmig vom Deckelteil abragenden Rastarme.

Mit der dadurch geschaffenen Radiusverrasterung zwischen den freien Enden des Unterteils und den halbkreisförmigen Rastarmen des Deckelteils ist ein Toleranzbereich überbrückbar, der bei einem Montagewinkel von weniger als 90° auftritt und bei dem das Deckelteil erfindungsgemäß trotzdem ohne Probleme auf das Unterteil aufgerastet werden kann, ohne das Oberteil stark verformen zu müssen.

Die Vorteile des erfindungsgemäßen Winkelkanals gegenüber dem bekannten Stand der Technik werden darin gesehen, daß das Deckelteil sich mit seiner Rastverbindung über die halbkreisförmigen Rasten im Bereich der Rastverbindung über einen bestimmten Weg bewegen kann, ohne die Rastverbindung zu lösen. Auf diese Weise können die Wandtoleranzen Ober den vorgegebenen Wegabschnitt aufgefangen werden, so daß keine negative Spalt- oder Spannungswirkungen in den Übergangsbereichen zwischen den freien Enden des Deckelteils und den zugeordneten Wandabschnitten auftritt.

In der Zeichnung sind Ausführungsbeispiele des erfindungsgemäßen Winkelkanals schematisch dargestellt; es zeigt:
Fig. 1 den Winkelkanal im Querschnitt nach Endmontage in einem 90°-Wandwinkel.
Fig. 2 den Winkelkanal im Querschnitt nach Endmontage in einem 85°-Wandwinkel.

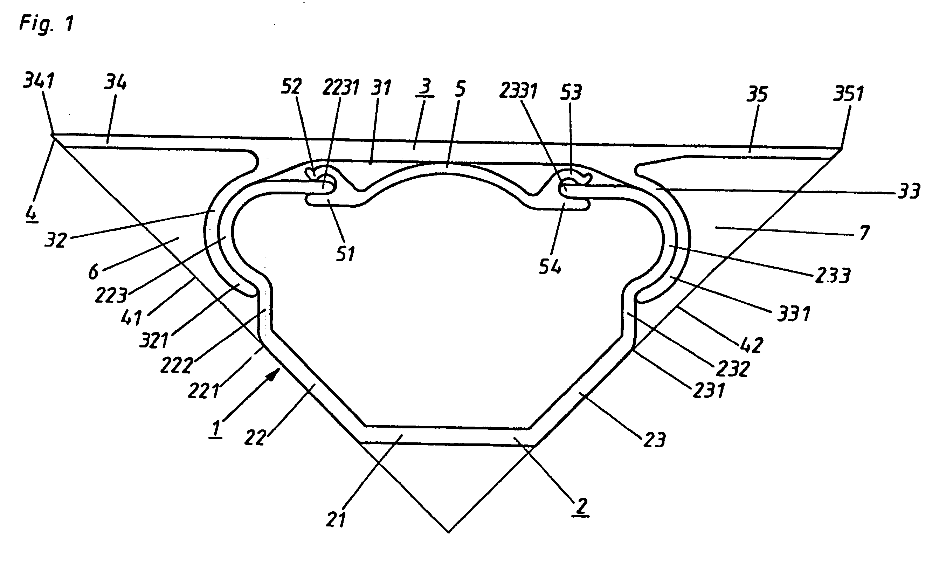

Der in Fig. 1 gezeigte Winkelkanal 1 besteht aus dem Unterteil 2 und dem Deckelteil 3. Das Unterteil 2 ist trapezförmig mit einem abgeschnittenen Bodenteil 21 und den Seitenwänden 22, 23 gestaltet, wobei die letzteren an den Eckbereichen 41, 42 der Gebäudewand 4 anliegen.

Von den freien Enden 221, 231 der Seitenwände 22, 23 ragen im rechten Winkel zum Deckelteil 3 gerichtete Teilbereiche 222, 232 ab, an welche sich die den Radius bildenden freien Enden 223, 233 des Unterteils 2 anschliessen.

Das Deckelteil 3 besitzt von seiner Innenwand 31 abragende halbkreisförmige Rastarme 32, 33, welche in ihrer Form dem Radius an den freien Enden 223, 233 des Unterteils 2 angepaßt sind. Die halbkreisförmigen Rastarme 32, 33 werden von den flexiblen Spitzen 34, 35 abgedeckt, welche mit ihren freien Enden 341, 351 abdeckend an den Eckbereichen 41, 42 der Gebäudewand 4 anliegen.

In der Darstellung sind die freien Enden 2231, 2331 des Unterteils 2 durch eine Halteklammer 5 gefaßt, welche durch ihre Halteschenkel 51, 52, 53, 54 das Gewicht der in den Kanal eingelegten Kabel (in der Zeichnung nicht dargestellt) besonders gut hält.

Die abgewinkelten Teilbereiche 222, 232 der Seitenwände 22, 23 bilden im Zusammenwirken mit den Eckbereichen 41, 42 der Gebäudewand 4 jeweils eine Eingriffsöffnung 6, 7 für die freien Enden 321, 331 der halbkreisförmigen Rastarme 32, 33 des Deckelteils 3.

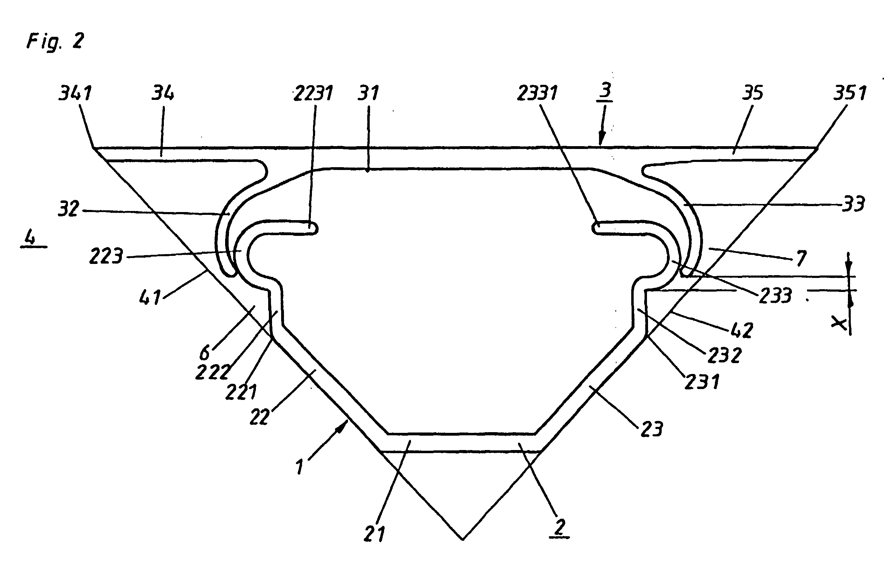

Fig. 2 zeigt den Winkelkanal 1 im Querschnitt gemäß Fig. 1 nach der Endmontage in einem kleineren Wandwinkel als in Fig. 1 dargestellt. Gleiche Merkmale haben in Fig. 2 die gleichen Bezugszahlen erhalten wie in Fig. 1. Die Darstellung zeigt den Toleranzausgleich X, der durch den kleineren Wandwinkel - z.B. 85° - erforderlich ist. Dieser Toleranzausgleich X kommt dadurch zustande, daß die halbkreisförmigen Rastarme 32, 33 des Deckelteils 3 nicht in die Endstellung einrasten, wie in Fig. 1 gezeigt, sondern in einer Art Vorverrastung stehen bleiben. Der Grad dieser Vorverrastung wird von den freien Spitzen 34, 35 des Deckelteils 3 bestimmt. Sobald diese an denzugeordneten Wandbereichen 41, 42 der Gebäudewand 4 anstoßen, ist der Aufrastvorgang unter Bildung der Toleranzgröße X abgeschlossen. Aufgrund der radialen Biegung der freien Enden des Unterteils und der entsprechend gestalteten halbkreisförmigen Rastarme des Deckelteils hintergreifen die letzteren zumindest teilweise die Biegungen an den freien Enden des Unterteils und legen das Deckelteil auf dem Unterteil mit ausreichender Kraft fest.

Die in Fig. 1 gezeigte Halteklammer 5 kann selbstverständlich auch bei der Darstellung nach Fig. 2 verwendet werden.

## Patentansprüche

1. Winkelkanal (1) zur Verlegung von Leitungen in den Eckbereichen von aneinanderstoßenden Gebäudewänden (4), wobei das Unterteil (2) mit seinen um 90° abgewinkelten Außenwänden (22, 23) an den Gebäudewänden (4) anliegt und mit einem Deckelteil (3), welches an den freien Enden (223, 233) der Außenwände (22, 23) des Unterteils (2) einrastet, verschließbar ist, **dadurch gekennzeichnet, daß** die freien Enden (223, 233) des Unterteils (2) in einem vorgegebenen Radius nach innen gebogen sind, daß in entsprechenden Abmessungen von der Innenwand (31) des Deckelteils (3) halbkreisförmige Rastarme (32, 33) abragen, welche in ihrer Form dem Radius an den freien Enden (223, 233) des Unterteils (2) angepaßt sind und diesen von außen her rastend umfassen, und daß das Deckelteil (3) in Spitzen (34, 35) ausläuft, welche die Rastarme (32, 33) abdeckend übergreifen.

2. Winkelkanal nach Anspruch 1, **dadurch gekennzeichnet, daß** die den Radius bildenden freien Enden (223, 233) des Unterteils (2) von einem abgewinkelten Teilbereich (222, 232) der Seitenwände (22, 23) Im rechten Winkel zum Deckelteil (3) gerichtet abragen.

3. Winkelkanal nach Anspruch 1, **dadurch gekennzeichnet, daß** die abgewinkelten Teilbereiche (222, 232) der Seitenwände (22, 23) zusammen mit der Gebäudewand (4) jeweils eine Eingriffsöffnung (6, 7) für die freien Enden der halbkreisförmigen Rastarme (32, 33) des Deckelteils (3) bilden.

4. Winkelkanal nach einem oder mehreren der vorangegangenen Ansprüche, **dadurch gekennzeichnet, daß** mit der Radiusverrasterung zwischen den freien Enden (223, 233) des Unterteils (2) und den halbkreisförmigen Rastarmen (32, 33) des Deckeltells (3) ein Toleranzbereich (X) überbrückbar ist.

## Claims

1. Corner trunking (1) for laying cables in the corners of abutting walls in buildings (4), in which the base (2) is in contact with the walls of the building (4) with its 90° angled outer walls (22, 23) and can be enclosed with a cover (3) which clips into the ends (223, 233) of the outer walls (22, 23) of the base (2),
**characterised by**:
The ends (223, 233) of the base (2) are curved inwards with a specified radius. Semicircular grips (32, 33) in corresponding dimensions project from the inside wall (31) of the cover (3) whose shape is adjusted to the radius at the ends (223, 233) of the base (2) and which clip around these from the outside. The cover (3) ends in tips (34, 35) which project beyond and cover the grips (32, 33).

2. Corner trunking according to Claim 1, **characterised by**: The ends (223, 233) of the base (2) which form the radius project from angled sections (222, 232) of the side walls (22, 23) at an angle perpendicular to the cover (3).

3. Corner trunking according to Claim 1, **characterised by**: The angled sections (222, 232) of the side walls (22, 23) and the walls of the building (4) form meshing openings (6, 7) for the ends of the semicircular grips (32, 33) of the cover (3).

4. Corner trunking according to one of the above claims, **characterised by**: a tolerance range (X) can be bridged by the radial meshing of the ends (223, 233) of the base (2) and the semicircular grips (32, 33) of the cover (3).

## Revendications

1. Goulotte d'angle (1) pour la pose de lignes ou conduites en angle de murs contigus (4), le socle (2) avec des parois extérieures formant un angle de 90° (22, 23) venant se plaquer sur les murs (4) et pouvant être obturé par un de couvercle (3), venant se clipser sur les extrémités libres (223, 233) des parois extérieures (22, 23) du socle (2),
**caractérisée en ce que**,
les extrémités libres (223, 233) du socle (2) sont coudées vers l'intérieur suivant un rayon donné, des pattes de clipsage semi-circulaires (32, 33) de dimensions correspondantes s'écartent de la paroi intérieure (31) du couvercle (3), avec une forme adaptée au rayon des extrémités libres (223, 233) du socle (2) et viennent se clipser sur celles-ci en les enveloppant par l'extérieur, le couvercle (3) se termine par des pointes (34, 35) masquant entièrement les pattes de clipsage (32, 33).

2. Goulotte d'angle selon revendication 1 **caractérisée en ce que** les extrémités libres (223, 233) du socle (2) formant le rayon, s'écartent d'une partie pliée (222, 232) des parois latérales (22, 23) formant un angle droit avec le couvercle (3).

3. Goulotte d'angle selon revendication 1 **caractérisée en ce que** les parties pliées (222, 232) des parois latérales (22, 23) forment avec le mur (4) un espace d'accès (6, 7) pour les extrémités libres des pattes de clipsage de forme semi-circulaire (32, 33) du couvercle (3).

4. Goulotte d'angle selon une ou plusieurs des revendications précédentes **caractérisée en ce qu'**une plage de tolérances (X) peut être absorbée avec l'accrochage sur rayons, entre les extrémités libres (223, 233) du socle (2) et les pattes de clipsage semi-circulaires (32, 33) du couvercle (3).
